# FASCICULE DE BREVET EUROPEEN

(11) **EP 1 776 302 B1**
(45) Date de publication et mention de la délivrance du brevet: **06.01.2010**
(21) Numéro de dépôt: 05777252.7
(22) Date de dépôt: 15.06.2005
(51) Int. Cl.: B65G 69/04

(54) **DISPOSITIF ET PROCEDE POUR LE CHARGEMENT D'UNE ENCEINTE AVEC UN SOLIDE DIVISE**
VORRICHTUNG UND VERFAHREN ZUM BELADEN EINER KAMMER MIT EINEM GETRENNTEN FESTKÖRPER
DEVICE AND METHOD FOR LOADING A CHAMBER WITH A DIVIDED SOLID

(30) Priorité: 02.07.2004 FR 0407355
(43) Date de publication de la demande: 25.04.2007
(73) Titulaire: TOTAL RAFFINAGE MARKETING, 92800 Puteaux (FR)
(72) Inventeur: PINON, Ulysse, F-76600 Le Havre (FR); DROMARD, Nicolas, F-76600 Le Havre (FR); COTTARD, Bernard, F-76430 Saint Romain de Colbosc (FR)
(74) Mandataire: Doressamy, Clarisse
(86) Numéro de dépôt international: PCT/FR2005/001486
(87) Numéro de publication internationale: WO 2006/013240

(56) Documents cités:
- EP-A- 0 116 246
- WO-A-02/08099
- US-A- 3 490 619
- US-A- 4 300 725
- PATENT ABSTRACTS OF JAPAN vol. 007, no. 081 (M-205), 5 avril 1983 (1983-04-05) & JP 58 006844 A (HITACHI SEISAKUSHO KK), 14 janvier 1983 (1983-01-14)

## Description

L'invention concerne un dispositif et un procédé de chargement d'une enceinte avec un solide divisé, en particulier d'un réacteur chimique avec un catalyseur, permettant notamment, grâce à la configuration creuse d'un arbre de rotation, l'introduction et/ou le retrait d'un dispositif fonctionnel dans l'enceinte en cours de chargement.

Un dispositif et un procédé de chargement d'une enceinte avec un solide divisé est par exemple décrit dans le document WO-A-0208 099.

L'invention concerne plus particulièrement le chargement des réacteurs à lit fixe de type chimique ou électrochimique, pétrolier ou pétrochimique, avec des particules solides à l'état divisé, qui peuvent se présenter sous forme de billes, de grains, de cylindres, de pastilles, de bâtonnets ou de toute autre forme, mais qui sont généralement de dimensions relativement faibles. Les particules peuvent être en particulier des tamis moléculaires ou des grains de catalyseurs solides, généralement extrudés, réalisés soit sous forme irrégulière, soit sous forme de bâtonnets mono- ou multilobes, dont les dimensions varient selon les cas, de quelques dixièmes de millimètres à quelques centimètres.

C'est à cette application que l'on se référera plus particulièrement dans la suite de la présente description, mais le dispositif et le procédé selon l'invention s'appliquent au chargement de tout autre type de particules solides dans une enceinte.

On connaît un certain nombre de procédés et de dispositifs permettant d'augmenter la densité d'un lit fixe de particules de catalyseur dans un réacteur chimique. Ces procédés ont en commun l'introduction des particules à charger par le sommet du réacteur et la collision des particules individuelles pendant leur chute avec des déflecteurs mécaniques fixes ou mobiles, provoquant une déviation aléatoire des particules. Idéalement, les particules ainsi détournées de leur trajet de chute verticale tombent individuellement et librement par effet de pluie sur l'ensemble de la surface du front de remplissage où elles forment un dépôt dense et homogène.

La Demanderesse, dans le cadre de ses efforts pour optimiser ces systèmes de chargement de réacteurs, a mis au point un dispositif de remplissage amélioré qui, grâce à un système de dispersion particulier avec des déflecteurs souples articulés sur un arbre en rotation, a permis de réduire considérablement l'encombrement stérique du système de déflecteurs et de faciliter son installation dans les réacteurs. Ce système de base est décrit dans la demande de brevet EP 0 0 007 854 et des améliorations de ce dispositif de remplissage sont divulguées par exemple dans les demandes EP 0 116 246 et EP 0 769 462.

Malgré des systèmes de déflecteurs performants, le comportement réel des particules de catalyseur au cours du remplissage du réacteur peut être différent du comportement idéal décrit ci-dessus. Le « front de remplissage », encore appelé « profil de chargement », c'est-à-dire l'interface entre le lit catalytique et la partie non encore remplie du réacteur, peut s'écarter parfois sensiblement de l'horizontale. Les particules de catalyseur, en particulier lorsqu'elles ont une forme anisotrope, se positionnent alors selon des directions privilégiées créant ainsi des chemins de passage préférentiels pour la charge liquide et le gaz réactif à travers le lit catalytique, entraînant un fonctionnement du réacteur qui devient insatisfaisant pour l'exploitant.

La Demanderesse arrive actuellement à garantir à ses clients des pentes du front de remplissage ne dépassant pas 10 %, mais elle cherche toujours à réduire cette valeur afin d'assurer un fonctionnement optimal des réacteurs remplis avec le dispositif de chargement dense.

Il est par conséquent souhaitable de pouvoir vérifier au cours du chargement, continuellement ou à certains intervalles, l'horizontalité du front de remplissage afin de modifier, si nécessaire, les paramètres de fonctionnement du dispositif de chargement pour corriger une éventuelle dérive de la pente de ce front de remplissage.

Une solution consiste actuellement à arrêter le chargement afin de permettre la vérification, par des moyens adaptés, de l'horizontalité du front de remplissage en regard des critères de qualité de la société responsable du chargement ainsi que ceux de l'exploitant. Si cette vérification permet de corriger les paramètres de fonctionnement du dispositif de remplissage, notamment la vitesse de rotation du système de dispersion des particules, l'interruption de l'opération de chargement qu'elle implique est pénalisante pour l'exploitant car elle augmente le temps d'immobilisation du réacteur. Par ailleurs, cette solution est relativement complexe puisqu'elle nécessite le démontage du dispositif de remplissage pour l'installation d'un système de mesure adapté.

D'autres solutions ont été proposées dans la technique, par exemple la demande de brevet japonais JP 7-242337 qui divulgue un procédé et un dispositif de suivi du remplissage d'une enceinte (réacteur) par un catalyseur granulaire. Le dispositif décrit dans cette demande comprend un moyen de remplissage, situé au centre de la partie supérieure de l'enceinte, répandant une pluie de grains de catalyseur, ainsi qu'un dispositif émetteur d'un rayon laser balayant la surface du front de remplissage et un moyen détectant le rayon laser émis par le dispositif émetteur et réfléchi par la surface du front de charge. Les dispositifs émetteur et détecteur sont fixés sur la paroi de l'enceinte, à hauteur du moyen de remplissage. Le système décrit dans cette demande présente l'inconvénient d'être assez difficile et long à installer sur l'enceinte à remplir, augmentant ainsi de manière indésirable la période d'inactivité du réacteur. Par ailleurs, ce système comportant un moyen de mesure télémétrique à hauteur du moyen de remplissage ne peut pas fonctionner avec le dispositif de chargement dense décrit dans EP 0 769 462, car la présence des déflecteurs en rotation entre le front de remplissage et le système de mesure télémétrique perturberait les mesures télémétriques au laser.

La Demanderesse a récemment mis au point un système qui, tout en fonctionnant essentiellement selon le même principe que le système de chargement dense (Densicat^{®}) divulgué dans EP 0 769 462, avec la même facilité de mise en place et de fonctionnement, permet, entre autres possibilités, l'introduction d'un dispositif de mesure de l'avancement et de la qualité de remplissage et, en particulier, de la pente du front de remplissage. Selon la présente invention, l'introduction d'un instrument de mesure est possible grâce au remplacement de l'arbre de rotation plein de l'état de la technique par un arbre creux ayant des dimensions internes appropriées, c'est-à-dire des dimensions permettant, soit le passage d'un moyen de suspension dudit instrument, soit le passage dudit instrument lui-même après installation du dispositif de chargement sur le réacteur, ou permettant également d'effectuer une opération précise dans la zone à charger, ou encore la combinaison de ces dernières.

La présente invention a par conséquent pour objet un dispositif de chargement homogène de particules solides selon la revendication 1.

La présente invention a en outre pour objet un procédé pour le chargement de particules solides dans une enceinte, du haut vers le bas sur toute la section de ladite enceinte, au moyen d'un tel dispositif.

L'invention a enfin pour objet l'utilisation d'un tel dispositif pour le chargement des réacteurs pétroliers, chimiques ou pétrochimiques.

Dans le dispositif de chargement de la présente invention, les particules de catalyseur en provenance du moyen d'alimentation descendent, sous l'effet de la gravité, dans le conduit d'alimentation, entre la paroi interne dudit conduit d'alimentation et la paroi externe de l'arbre central en rotation. Le conduit d'alimentation comporte à sa base au moins un orifice d'évacuation, situé au-dessus du système de dispersion, par lequel les particules tombent sur le système de dispersion entraîné en rotation par l'arbre central.

Le moteur qui entraîne en rotation l'arbre central tubulaire du dispositif de l'invention est de préférence excentré par rapport à cet arbre et peut être alimenté par un gaz comprimé quelconque, par exemple par de l'air ou de l'azote. La transmission du mouvement rotatif du moyen moteur vers l'arbre tubulaire peut se faire par n'importe quel moyen connu approprié, par exemple par une courroie, une chaîne ou un jeu de pignons, ou encore par une combinaison de ces moyens.

Comme indiqué ci-dessus, les dimensions internes de l'arbre central doivent être suffisantes pour permettre de réaliser dans la zone à charger, pendant la période de chargement, un certain nombre d'opérations connexes ou complémentaires à ladite opération de chargement.

De telles opérations peuvent impliquer ou non le passage d'un dispositif fonctionnel. Lorsque le passage d'un dispositif fonctionnel n'est pas nécessaire pour l'opération à réaliser, c'est-à-dire lorsqu'il s'agit par exemple d'une simple aspiration de poussières à travers le tube en rotation, ou lorsqu'un dispositif fonctionnel est suspendu, avant la mise en service du système rotatif, à un moyen de suspension qui traverse la lumière dudit tube, le diamètre de ce tube peut être relativement faible. Par contre, lorsqu'on souhaite introduire et/ou retirer un dispositif fonctionnel à travers la lumière défini par l'arbre creux, le diamètre intérieur de celui-ci est généralement plus important et doit en tous cas être suffisant pour permettre le passage dudit dispositif fonctionnel.

Concrètement le tube formant l'arbre central du dispositif selon l'invention a de préférence un diamètre interne supérieur à 2 cm, et plus particulièrement supérieur à 10 cm.

Lors de l'introduction du dispositif fonctionnel en cours de chargement via la lumière de l'arbre central, ce dispositif fonctionnel risque de heurter le tube en rotation et d'être endommagé. Par ailleurs, le manipulateur chargé de guider le dispositif fonctionnel à travers le canal vertical de l'arbre court le risque de toucher le tube en rotation et de se blesser. Pour remédier à ce double inconvénient, il a été prévu un tube supplémentaire fixe, isolant le tube en rotation du dispositif fonctionnel et du manipulateur. Par conséquent, le dispositif de chargement selon l'invention comprend un tube de protection fixe ayant un diamètre extérieur inférieur au diamètre intérieur du tube rotatif. Ce tube de protection fixe est placé dans la lumière du tube rotatif de manière à ce que les deux tubes soient sensiblement coaxiaux. Ce tube fixe est solidaire du conduit d'alimentation. La réunion du tube fixe et du conduit d'alimentation peut se faire par exemple au niveau de leur extrémité supérieure.

Le remplacement d'un arbre plein par un arbre creux de diamètre interne relativement important est susceptible de créer dans la zone centrale du front de chargement une ombre centrale, située immédiatement en dessous de la lumière de l'arbre ou du tube fixe, se traduisant par un creux sur le front de remplissage dû à un apport insuffisant de particules. Pour remédier à ce défaut éventuel de particules et à la formation d'un creux dans la zone centrale de l'enceinte, la Demanderesse a mis au point un dispositif permettant d'envoyer de manière ciblée des particules vers le centre du front de chargement. Ce dispositif est un déflecteur central fixé à l'extrémité inférieure du tube fixe ou du tube en rotation et situé en dessous du système de dispersion. Il doit être conçu de manière à permettre la distribution de particules en une quantité contrôlée dans la zone située immédiatement sous la lumière du tube en rotation.

On peut en principe utiliser n'importe quel type de déflecteur capable de dévier les particules vers le centre de l'enceinte. Dans un mode de réalisation préféré du dispositif selon l'invention, ce déflecteur a la forme d'un entonnoir, de préférence d'un entonnoir ajouré, c'est-à-dire d'un entonnoir comportant un certain nombre d'ouvertures suffisamment grandes pour laisser passer les particules à charger. Ces ouvertures peuvent être pourvues d'un mécanisme permettant de régler leur taille, par exemple des volets réglables, qui peuvent être pilotés à distance, notamment à partir de l'extérieur du réacteur. Ceci permet d'ajuster très finement la répartition des particules recueillies par le déflecteur dans la zone centrale du front de chargement.

Dans un mode de réalisation particulièrement préféré du dispositif de l'invention, l'entonnoir formant le déflecteur central solidaire de l'extrémité inférieure du tube fixe est alimenté par un deuxième entonnoir, appelé ci-après « entonnoir d'alimentation du déflecteur central ».

Cet entonnoir d'alimentation du déflecteur central prélève un flux limité de particules solides à partir de la base du conduit d'alimentation et dirige ce flux de particules directement vers le déflecteur central en court-circuitant le système de dispersion. L'entonnoir d'alimentation du déflecteur central est solidaire du tube en rotation. Il traverse le système de dispersion des particules et aboutit au-dessus du déflecteur central. Bien entendu, la partie inférieure dudit entonnoir d'alimentation doit avoir un diamètre suffisant pour permettre le libre écoulement des particules solides vers le déflecteur central.

L'entonnoir d'alimentation du déflecteur central reçoit des particules à partir d'au moins un orifice prévu dans la base du conduit d'alimentation. Ce ou ces orifices sont situés au-dessus de la trajectoire circulaire que parcourt l'extrémité supérieure de l'entonnoir d'alimentation, solidaire du tube rotatif. La base du conduit d'alimentation comporte de préférence plusieurs orifices situés à égale distance les uns par rapport aux autres, au-dessus de la trajectoire de l'entonnoir d'alimentation du déflecteur central.

Comme expliqué en introduction, le dispositif selon l'invention comprend de préférence un dispositif fonctionnel suspendu au-dessous de l'extrémité inférieure du tube en rotation, du tube fixe ou du déflecteur central. Ce dispositif fonctionnel est tenu par un moyen de suspension, par exemple un fil, une tige, un tube, un câble ou une chaîne, passant par la lumière du tube en rotation ou du tube fixe. Il peut être commandé par un moyen de commande externe et sert à réaliser des opérations connexes ou complémentaires à l'opération de chargement.

Bien que le problème ayant conduit à la présente invention était la difficulté d'introduction, dans l'enceinte à remplir, d'un instrument permettant de contrôler la qualité du remplissage, le canal défini par l'arbre creux peut de toute évidence servir au passage d'une grande variété de dispositifs fonctionnels servant à des fins très différentes.

Dans un mode de réalisation préféré de l'invention, le dispositif fonctionnel introduit par la lumière de l'arbre creux est un dispositif de télémétrie fonctionnant avec des ondes mécaniques (par exemple un sonar ou un télémètre à ultrasons) ou avec des ondes électromagnétiques (par exemple un télémètre à laser). Les données recueillies par un tel dispositif de télémétrie sont de préférence immédiatement transmises, enregistrées et exploitées par un système informatique approprié et peuvent servir à modifier, si nécessaire, les paramètres de fonctionnement du dispositif de chargement dense selon l'invention afin de corriger une horizontalité insuffisante du front de chargement.

On peut également remplacer un tel dispositif de télémétrie par une caméra ou un appareil photographique, de préférence numérique, permettant une évaluation visuelle de la qualité du chargement. L'utilisation d'un appareil photographique ou d'une caméra implique généralement l'introduction d'une source d'éclairage qui est de préférence fixée sur l'appareil photo ou la caméra mais peut être introduite séparément.

Il peut également être intéressant de suivre, au cours du chargement de l'enceinte, des paramètres physiques ou physicochimiques autres que l'horizontalité du front de chargement, tels que la température, l'humidité relative, la quantité de poussières fines en suspension dans l'air, la teneur en oxygène ou de chlore à l'intérieur de l'enceinte, etc. Les capteurs appropriés pour mesurer ces paramètres sont connus dans la technique et pourront être choisis et adaptés par l'homme du métier aux conditions particulières d'utilisation du dispositif de la présente invention.

Dans une variante du dispositif de la présente invention, le dispositif fonctionnel introduit par la lumière de l'arbre creux ne sert pas à la mesure de paramètres physicochimiques à l'intérieur de l'enceinte, mais à l'introduction ou à la sortie de matière. On peut envisager par exemple un dispositif de prélèvement permettant de prélever des échantillons de solide divisé ou de poussière en suspension dans l'air au-dessus du dépôt, ou encore un dispositif d'aspiration permettant d'aspirer en continu ces poussières fines. Enfin, l'arbre creux du dispositif de la présente invention pourrait servir à l'introduction d'un second solide divisé et d'un dispositif assurant la répartition ou dispersion régulière dudit second solide divisé. Un tel dispositif d'introduction et de dispersion sera décrit plus en détail ci-après en référence aux dessins.

Il va de soi que les différents dispositifs fonctionnels peuvent être introduits simultanément ou successivement ou qu'un dispositif peut réunir plusieurs fonctions.

Dans un autre mode de réalisation du dispositif de chargement de la présente invention, un dispositif fonctionnel peut être fixé, non pas par un moyen de suspension traversant la lumière du tube creux, mais directement sur le tube fixe, à l'extrémité de celui-ci, dépassant le tube en rotation.

L'arbre creux du dispositif de chargement de l'invention pourrait également permettre le passage d'un moyen pour commander un dispositif fonctionnel de grande taille installé préalablement au chargement en dessous du système de dispersion.

Comme il a été mentionné ci-dessus, l'arbre creux du dispositif de chargement dense de la présente invention permet le passage d'un dispositif d'aspiration destiné à aspirer en continu, ou à des intervalles réguliers, les poussières, ou « fines », en suspension dans l'air au-dessus du dépôt de solides divisés. Dans le cadre du remplissage de réacteurs par des catalyseurs, l'existence de ces fines dans le catalyseur ou leur formation par attrition pendant l'opération de remplissage de l'enceinte, pose un problème d'encrassement des systèmes de traitement et de séparation des effluents, situés en aval du réacteur. Il est donc souhaitable d'éliminer ces fines avant la mise en route du réacteur. La solution mentionnée ci-dessus consistant à introduire un dispositif d'aspiration par le canal de l'arbre creux dans la zone située en dessous des déflecteurs en rotation n'est toutefois pas idéale car elle risque de créer des perturbations de l'écoulement d'air dans cette zone et de modifier la trajectoire de chute des particules de catalyseur avec, pour conséquence, un défaut d'homogénéité du dépôt.

La Demanderesse a trouvé un moyen d'aspirer efficacement les fines de catalyseur en mettant à profit le caractère creux de l'arbre de rotation et du tube fixe sans pour autant perturber l'écoulement de l'air dans la zone au-dessous des déflecteurs. Une telle aspiration peut être obtenue grâce à un système d'aspiration de poussières par le tube en rotation ou par le tube fixe. Les parois du tube en rotation et du tube fixe, éventuellement présent, comportent à cet effet une ou plusieurs lumières d'aspiration, situées de préférence dans la zone où commence la chute libre des particules solides sortant de l'orifice du conduit d'alimentation et/ou dans la zone de formation des poussières fines suite à l'impact sur la surface des déflecteurs en rotation, autrement dit dans la zone du système de dispersion.

Le dispositif de chargement de la présente invention peut fonctionner avec n'importe quel type de système de dispersion conçu pour dévier de manière parfaitement aléatoire les particules solides sortant de l'orifice d'évacuation de la base du conduit d'alimentation, et les faire tomber individuellement en une pluie de particules (système de dispersion à « effet de pluie »).

Dans un mode de réalisation préféré, le système de distribution comprend des éléments déflecteurs solidaires de l'arbre central. Ces déflecteurs sont généralement en un matériau semi-rigide, de préférence en caoutchouc, et sont susceptibles de s'écarter angulairement de l'arbre central sous l'effet de la force centrifuge lorsque ledit arbre central est en rotation. Un tel ensemble de déflecteurs est décrit par exemple dans la demande EP 0 769 462. Les déflecteurs sont de préférence disposés en plusieurs niveaux et à chaque niveau est prévu un même nombre d'éléments déflecteurs ayant des formes sensiblement identiques, disposés verticalement à l'aplomb des uns des autres.

Le système de dispersion peut également être une tête de dispersion constituée d'une série de plateaux sensiblement horizontaux, parallèles entre eux et coaxiaux, disposés les uns au-dessous des autres et dont l'aire balayée au cours de la rotation va en diminuant depuis le plateau supérieur jusqu'au plateau inférieur, chaque plateau, à l'exception du plateau inférieur, comportant en son centre une ouverture sensiblement circulaire permettant l'écoulement d'au moins une partie des particules solides, par gravité, vers le plateau situé immédiatement au-dessous. Un tel système de dispersion est décrit en détail dans la demande FR 2 721 900 et est exploité sous la dénomination commerciale CATAPAC par la société Petroval.

Un autre mode de réalisation envisageable pour le système de dispersion pouvant fonctionner avec le dispositif de chargement selon l'invention est celui décrit dans la demande internationale WO 00/43304. Ce système de dispersion comprend deux conduits, présentant chacun une ouverture d'écoulement des particules, opposés l'un à l'autre et courbés autour d'un même axe perpendiculaire à l'axe de rotation dudit système de dispersion, de telle sorte que leurs ouvertures d'écoulement sont situées chacune d'un côté de l'axe de rotation dudit système de dispersion, sensiblement dans un même plan diamétral. Chacun de ces conduits comprend en outre au moins une cloison longitudinale s'étendant sur l'ensemble ou sur une large partie de sa longueur, cette cloison étant propre à diviser le flux de particules et à répartir l'écoulement de celui-ci, à l'encontre de la force centrifuge, sur l'ensemble ou sur une large partie de l'ouverture d'écoulement.

Un procédé de chargement d'une enceinte par un catalyseur selon l'invention utilisant un dispositif tel que décrit ci-dessus comprend généralement le réglage de la vitesse de rotation de l'arbre central en fonction du diamètre de l'enceinte à charger, l'introduction en continu, par le moyen d'alimentation, des particules solides dans le conduit d'alimentation du dispositif, et la réalisation d'une opération complémentaire ou connexe à l'opération de chargement à travers la lumière du tube en rotation ou du tube fixe.

Le procédé de chargement selon l'invention utilisant le dispositif décrit en détail ci-dessous comprend de préférence les étapes suivantes consistant
- à effectuer, pendant le chargement de l'enceinte, au moins un relevé du profil du front de chargement du lit catalytique à l'aide un dispositif fonctionnel de mesure, introduit par la lumière du tube en rotation ou du tube fixe,
- à déterminer quantitativement par traitement mathématique dudit relevé les écarts du profil de chargement par rapport à un profil idéal sensiblement horizontal,
- et à envoyer, en fonction du résultat ainsi obtenu, des signaux électriques pour commander l'ajustement de certains paramètres fonctionnels du dispositif de chargement.

Les paramètres fonctionnels du dispositif de chargement que l'on peut ajuster en fonction du profil de remplissage enregistré sont par exemple la vitesse de rotation de l'arbre central, l'ouverture du ou des orifices d'évacuation disposés à la base du conduit d'alimentation ou encore l'orientation du système de dispersion par rapport à l'axe vertical de l'enceinte.

La vitesse de rotation de l'arbre central est comprise dans la gamme généralement utilisée pour des dispositifs connus, et de préférence entre 25 et 250 tours/ minute, en particulier entre 40 et 150 tours par minute.

L'invention est maintenant décrite en référence aux dessins annexés, non limitatifs, dans lesquels :
- la figure 1 est une vue en coupe axiale d'un dispositif de remplissage à arbre creux selon l'invention,
- la figure 2 est une vue en coupe axiale de la zone inférieure d'un mode de réalisation de l'arbre creux,
- la figure 3 est une vue en coupe transversale selon l'axe A-A de la figure 1,
- la figure 4 est une vue en perspective agrandie d'un déflecteur central, et
- la figure 5 est une vue en coupe axiale de la zone inférieure de l'arbre creux illustrant un mode de réalisation du dispositif fonctionnel introduit par la lumière de l'arbre creux.

Les figures 6a et 6b montrent les profils du front de chargement, enregistrés par un dispositif télémétrique de type sonar, obtenus avec un dispositif selon l'invention respectivement sans et avec un déflecteur central tel que représenté sur la figure 4.

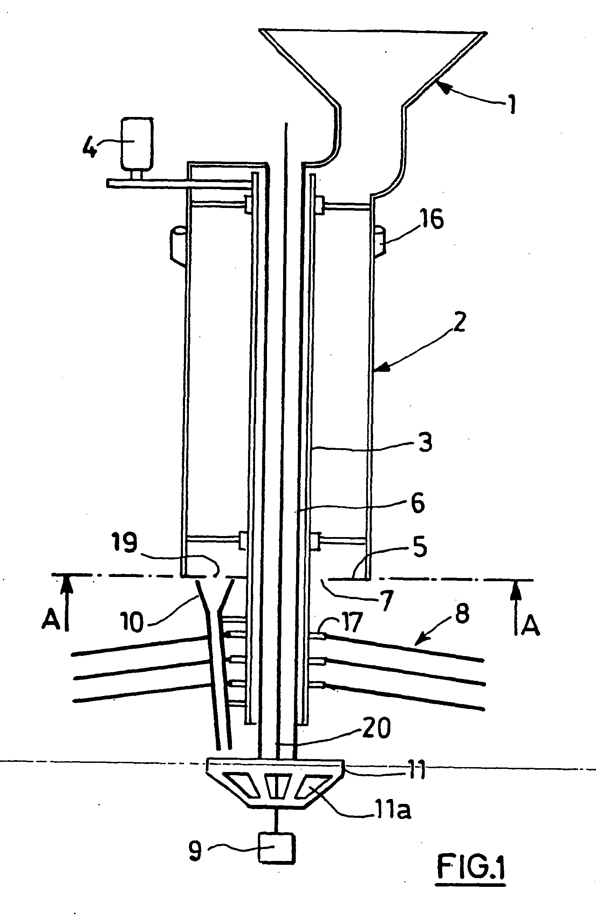

Le dispositif de remplissage de la figure 1 comporte une trémie 1 contenant le solide divisé. Cette trémie 1 est fixée sur le conduit d'alimentation 2 du dispositif. Pendant le procédé de remplissage, la trémie 1 et le conduit d'alimentation 2 sont remplis avec le solide divisé qui quitte le conduit d'alimentation 2 par des ouvertures 7 prévues dans la paroi latérale et/ou dans la base 5 de ce même conduit d'alimentation. Ces ouvertures 7 sont de préférence réglables, grâce à des moyens de fermeture réglables (non représentés), tels qu'un diaphragme à ouverture variable, permettant d'ajuster le débit d'entrée du solide divisé dans l'enceinte.

Le conduit d'alimentation 2 est traversée axialement, sur toute sa longueur, par un arbre creux 3, maintenu par au moins deux paliers, et entraîné en rotation par un moyen moteur 4, de préférence un moteur à air comprimé, placé sur le côté du conduit d'alimentation. La transmission entre le moteur 4 et l'arbre creux 3 se fait par tout moyen approprié, par exemple par une courroie. L'ensemble du dispositif de remplissage est maintenu et fixé dans le trou d'homme du réacteur par des tubes de support 16. Dans la zone au-dessous de l'extrémité inférieure du conduit d'évacuation 2, des déflecteurs en caoutchouc 8 sont fixés sur la paroi extérieure de l'arbre creux par l'intermédiaire d'éléments porte-déflecteurs 17.

Lors du procédé de remplissage d'un réacteur à l'aide du dispositif de la figure 1, le solide divisé introduit dans la trémie 1 descend par le conduit d'alimentation 2 jusqu'aux ouvertures réglables 7, à partir desquelles il tombe sur les déflecteurs articulés 8 en rotation.

Conformément à la présente invention, il est possible d'introduire dans l'enceinte, après installation du dispositif de remplissage, avant, pendant ou après le procédé de remplissage, un dispositif fonctionnel 9 ayant des dimensions suffisamment petites pour permettre son passage par la lumière de l'arbre creux. Le dispositif fonctionnel est suspendu à un moyen de suspension 20 approprié qui peut être, par exemple, un fil, une tige, un tube, un câble ou une chaîne.

La figure 1 représente un mode de réalisation du dispositif de chargement selon l'invention dans lequel un tube fixe 6 double l'arbre creux 3 de l'intérieur sur toute la longueur de celui-ci, de manière à l'isoler totalement du manipulateur en train de charger des particules dans la trémie 1 ou d'introduire un dispositif fonctionnel 9 à travers la lumière de l'arbre central. Le tube fixe est solidaire du conduit d'alimentation 2 auquel il est fixé par son extrémité supérieure. Dans le mode de réalisation représenté sur la figure 1, le tube fixe 6 est plus long que le tube 3 en rotation et dépasse celui-ci sur une faible longueur. A l'extrémité du tube fixe 6, en dessous du système de dispersion 8, est fixé un déflecteur central 11 qui a grossièrement la forme d'un entonnoir. Cet entonnoir 11 comporte une série d'ouvertures 11a suffisamment grandes pour laisser passer les particules à charger. Le déflecteur central recueille, d'une part, une certaine fraction des particules dispersées par le système de dispersion et, d'autre part, des particules provenant directement, via un entonnoir 10, du conduit d'alimentation sans avoir été dispersées par le système de dispersion 8. L'entonnoir 10 permet ainsi de court-circuiter ledit système de dispersion. L'entonnoir 10 d'alimentation du déflecteur central 11 est fixé sur l'arbre creux 3 et est mis en rotation avec les déflecteurs de dispersion 8. L'entonnoir 10 recueille des particules solides sortant par au moins une ouverture 19 prévue dans la base 5 du conduit d'alimentation. Sur cette figure 1, la ou les ouvertures 19 alimentant l'entonnoir 10 sont différentes des ouvertures 7 par lesquelles sortent les particules dispersées par le système de dispersion 8. Les deux types d'ouvertures 7 et 19 forment en effet deux cercles concentriques. On pourrait toutefois aussi bien envisager une seule série d'ouvertures formant, dans la base 5 du conduit d'alimentation, un seul cercle autour de l'axe central du dispositif de chargement.

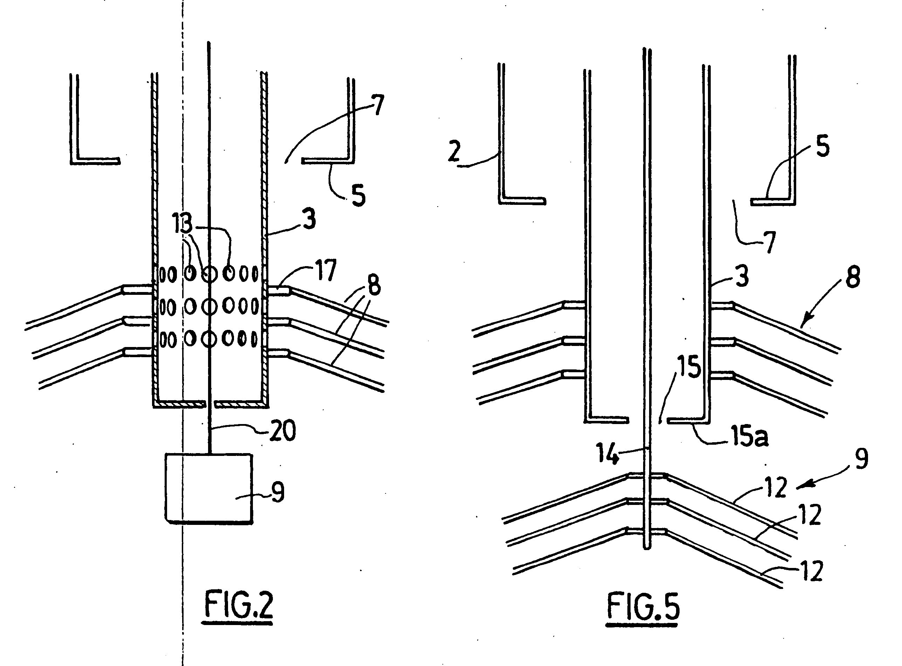

La figure 2 est une vue agrandie de la zone d'accrochage de trois séries de déflecteurs 8 sur la paroi extérieure de l'arbre creux 3. Le dispositif fonctionnel 9 introduit par la lumière de l'arbre creux 3, suspendu au moyen de suspension 20, est situé dans la zone au-dessous de l'extrémité inférieure de l'arbre creux 3. Par souci de clarté, seuls les déflecteurs situés dans le plan de la feuille ont été représentés, mais il faut comprendre que chaque série de déflecteur 8 est constituée d'une pluralité de déflecteurs accrochés le long d'une ligne horizontale tout autour de l'arbre creux. Immédiatement au-dessus de chacune de ces lignes horizontales d'accrochage est prévue une série de lumières d'aspiration 13. Ces lumières d'aspiration 13 permettent, grâce à un moyen d'aspiration (non représenté) situé dans l'arbre creux ou à l'extrémité supérieure de celui-ci, de soutirer les poussières fines en suspension dans l'air au voisinage immédiat de cette zone de l'arbre creux. La position de ces lumières d'aspiration 13 a été choisie de manière à ce que ces orifices soient situés à proximité de la zone de chute du solide divisé à partir de l'ouverture 7 et à proximité de la zone de formation des poussières fines suite à l'impact avec les déflecteurs 8.

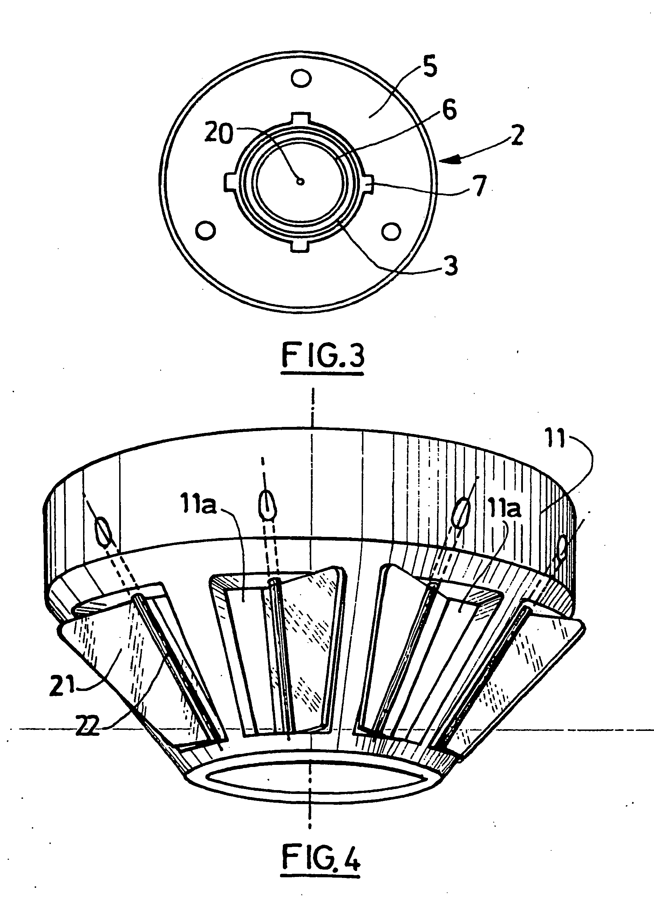

La figure 3 est une coupe transversale selon la ligne A-A de la figure 1. Sur cette figure, le cercle le plus à l'intérieur représente le tube fixe 6, le deuxième cercle correspond au tube rotatif 3 et le cercle le plus à l'extérieur à la paroi extérieure du conduit d'alimentation 2. Dans la base 5 du conduit d'alimentation sont ménagées deux types d'ouvertures : une première série de quatre ouvertures 7 formant un cercle très proche du tube rotatif 3, et une deuxième série de trois ouvertures 19 formant un cercle intermédiaire, plus proche de la paroi extérieure du conduit d'alimentation 2. Les particules sortant par les ouvertures 7 seront dispersées par le système de dispersion 8. Les particules sortant par les ouvertures 19 sont soit recueillies par l'entonnoir 10 d'alimentation du déflecteur central 11 lorsque celui-ci passe en dessous d'une de ces ouvertures 19, soit dispersées par le système de dispersion lorsque l'entonnoir 10 ne se trouve pas en dessous d'une de ces ouvertures 19.

La figure 4 est une vue en perspective par le dessous d'un déflecteur central 11. Ce déflecteur a une forme d'entonnoir avec une partie verticale et une partie en forme de cône inversé. Dans cette partie en forme de cône inversé sont ménagées des ouvertures 11a dont quatre seulement sont visibles sur cette figure. Au moins une partie de ces ouvertures 11a sont pourvues de volets 21 réglables par rotation autour d'un axe 22.

La figure 5 représente un mode de réalisation du dispositif de remplissage de la présente invention où le dispositif fonctionnel 9 est non pas un dispositif de mesure tel qu'une sonde de télémétrie à ultrasons ou à laser, mais un dispositif de répartition d'un deuxième solide divisé. La partie inférieure de l'arbre creux 3 avec les trois séries de déflecteurs 8 est identique à celle représentée sur la figure 1. Le dispositif fonctionnel 9 est constitué d'un second arbre 14 disposé sensiblement suivant l'axe de l'arbre creux 5 et, en aval de l'orifice de sortie 15 dudit arbre creux, d'au moins un élément déflecteur 12 articulé sur ledit second arbre 14 de manière à s'en écarter angulairement sous l'effet de la force centrifuge lorsque l'arbre est entraîné en rotation par un moteur (non représenté), indépendant du moteur 4 entraînant l'arbre creux 3. L'homme du métier comprendra que le dispositif fonctionnel représenté sur cette figure correspond sensiblement au dispositif de répartition d'un solide divisé selon l'état de la technique, divulgué pour la première fois dans la demande EP 0 007 854, à ceci près qu'il doit avoir des dimensions permettant de le faire passer à travers le canal formé par l'arbre creux. L'utilisation d'un tel dispositif de répartition d'un solide divisé en tant que dispositif fonctionnel permet d'introduire et de répartir de manière homogène un deuxième solide divisé, différent de celui dispensé par les ouvertures 7 du conduit d'alimentation 2. Ce second solide divisé est introduit par le canal de l'arbre creux 3 qui débouche dans l'orifice de sortie 15 et son débit peut être régulé par un diaphragme à ouverture variable 15a prévu à l'extrémité inférieure de l'arbre creux 3.

### Exemple

### Mise en évidence de l'efficacité du déflecteur central

On procède au chargement d'une enceinte d'un diamètre d'environ 3 mètres à l'aide d'un dispositif selon la présente invention, comportant, en tant que système de dispersion, des lanières en caoutchouc disposées en trois séries de hauteurs distinctes à l'extrémité du tube en rotation. Le tube en rotation est creux et présente un diamètre interne de 14 cm. Il est doublé par un tube fixe d'un diamètre interne de 13 cm. Ce tube fixe dépasse le tube en rotation d'environ 5 cm. A l'extrémité du tube fixe est fixé un détecteur sonar de modère Puls68 et commercialisé par la société VEGA, dont la tête de détection peut pivoter à un angle de 360 ° de manière à faire des mesures sur l'ensemble du front de remplissage. Le détecteur sonar est commandé par câble, à distance, par un système informatique. Ce système permet l'enregistrement, en un temps très court, de l'ordre de 30 secondes, du profil du front de chargement, et ceci à n'importe quel moment de l'opération de remplissage.

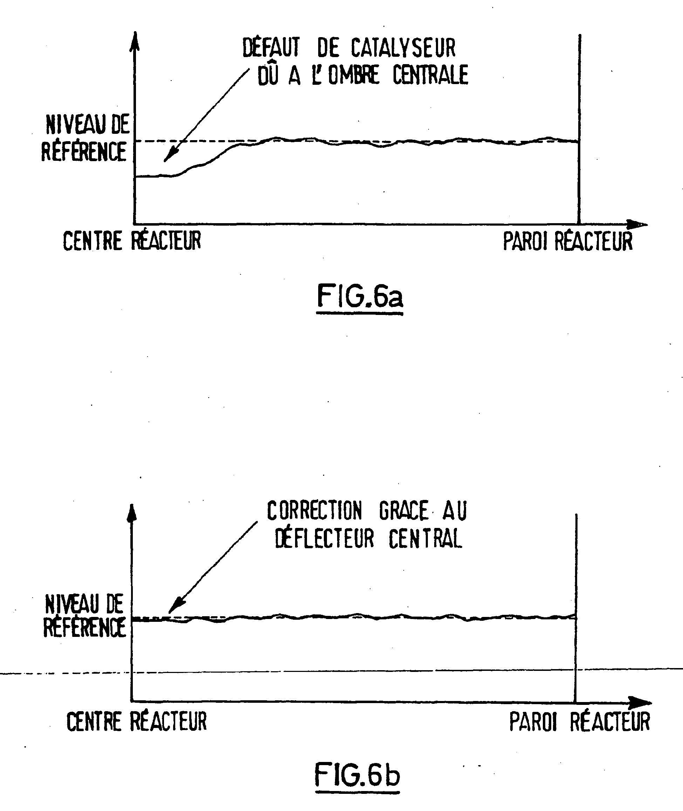

On réalise d'abord une première opération de chargement avec un tel dispositif tournant à une vitesse d'environ 70 tours/minute, en absence de déflecteur central. La figure 6a montre le profil du front de remplissage ainsi obtenu. On voit clairement qu'au centre de l'enceinte, sous l'ombre centrale, dans la prolongation de l'arbre creux, se forme un creux dû à un apport insuffisant de particules.

On répète l'opération de chargement dans des conditions identiques à ceci près que l'on fixe, à l'extrémité du tube fixe, un déflecteur tronconique ajouré tel que représenté à la figure 4. On constate (figure 6b) que le profil réel du front de chargement est sensiblement identique au profil idéal, plan et horizontal (niveau de référence).

## Revendications

1. Dispositif de chargement homogène de particules solides dans une enceinte comportant, à sa partie supérieure un moyen d'alimentation (1) en particules et, à sa base située à l'intérieur de l'enceinte à charger, un système de dispersion (8) solidaire d'un arbre central (3) entraîné en rotation autour d'un axe sensiblement vertical par un moyen moteur (4), et un conduit d'alimentation (2) entourant au moins partiellement l'arbre central (3), ledit arbre central (3) est un tube de diamètre interne suffisant pour permettre de réaliser dans la zone à charger, par l'intermédiaire de ce tube et pendant la période de chargement, un certain nombre d'opérations connexes ou complémentaires à ladite opération de chargement, ce dispositif étant **caractérisé en ce qu'**un tube fixe (6), solidaire du conduit d'alimentation (2) est placé à l'intérieur dudit arbre central (3) en rotation, le tube fixe (6) et ledit arbre central (3) en rotation étant sensiblement coaxiaux.

2. Dispositif selon la revendication 1, **caractérisé en ce que** les particules en provenance du moyen d'alimentation (1) circulent dans le conduit d'alimentation, de haut en bas, entre la paroi interne dudit conduit d'alimentation (2) et la paroi externe dudit arbre central (3) en rotation, ledit conduit d'alimentation comportant à sa base (5) au moins un orifice d'évacuation (7) des particules, situé au-dessus du système de dispersion (8).

3. Dispositif selon la revendication 1 ou 2, **caractérisé en ce que** le moyen moteur (4) est excentré par rapport à l'arbre central (3) en rotation.

4. Dispositif selon la revendication 3, **caractérisé en ce que** le moyen moteur (4) est alimenté par un gaz comprimé, de préférence de l'air ou de l'azote.

5. Dispositif selon l'une quelconque des revendications précédentes, **caractérisé en ce que** le tube formant l'arbre central (3) a un diamètre interne supérieur à 2 cm, de préférence supérieur à 10 cm.

6. Dispositif selon l'une quelconque des revendications précédentes, **caractérisé en ce qu'**il comprend en outre au moins un déflecteur central (11), fixé à l'extrémité inférieure du tube fixe (6) et situé en dessous du système de dispersion (8), conçu de manière à permettre la distribution de particules en une quantité contrôlée dans la zone située immédiatement sous la lumière de l'arbre central en rotation (3).

7. Dispositif selon la revendication 6, **caractérisé en ce qu'**il comprend en outre un entonnoir d'alimentation (10) du déflecteur central (11), solidaire de l'arbre central (3) en rotation, traversant le système de dispersion (8) et aboutissant au-dessus du déflecteur central (11), la partie inférieure dudit entonnoir d'alimentation (10) ayant un diamètre suffisant pour permettre le libre écoulement des particules solides vers le déflecteur central (11).

8. Dispositif selon l'une quelconque des revendications précédentes, **caractérisé en ce qu'**il comprend en outre un système d'aspiration de poussières par l'arbre central (3) en rotation et/ou par le tube fixe (6).

9. Dispositif selon la revendication 8, **caractérisé en ce que** les parois de l'arbre central (3) en rotation et du tube fixe (6) comportent à cet effet une ou plusieurs lumières d'aspiration (13), situées de préférence dans la zone du système de dispersion (8).

10. Dispositif selon les revendications précédentes, **caractérisé en ce qu'**il comprend en outre un dispositif fonctionnel (9) suspendu, au-dessous de l'extrémité inférieure de l'arbre central (3) en rotation, du tube fixe (6) ou du déflecteur central (11), à l'aide d'un moyen de suspension (20) passant par la lumière de l'arbre central (3) en rotation ou du tube fixe (6), et commandé par un moyen de commande externe, ledit dispositif fonctionnel (9) servant à réaliser des opérations connexes ou complémentaires à l'opération de chargement.

11. Dispositif selon la revendication 10, **caractérisé en ce que** le dispositif fonctionnel (9) est un dispositif de télémétrie notamment à laser, à ultrasons ou à sonar, un dispositif d'éclairage, un appareil photographique ou une caméra, en particulier numérique, un capteur, un dispositif d'analyse ou de contrôle, un dispositif de prélèvement, un dispositif d'aspiration, un dispositif d'introduction d'une quantité contrôlée d'un autre solide sous forme divisée, un dispositif de répartition d'un solide divisé, ou une combinaison de ceux-ci.

12. Procédé pour le chargement de particules solides dans une enceinte, du haut vers le bas sur toute la section de ladite enceinte, au moyen d'un dispositif selon l'une quelconque des revendications 1 à 11.

13. Procédé selon la revendication 12, **caractérisé en ce que**
- l'on règle la vitesse de rotation de l'arbre central (3) en fonction du diamètre de l'enceinte à charger,
- l'on introduit en continu, par le moyen d'alimentation (1), les particules solides dans le conduit d'alimentation (2) du dispositif, et
- l'on effectue une opération complémentaire ou connexe à l'opération de chargement à travers la lumière du tube (3) en rotation
ou du tube fixe (6).

14. Procédé selon les revendications 12 et 13, **caractérisé en ce que** :
- l'on effectue, pendant le chargement de l'enceinte, au moins un relevé du profil du front de chargement du lit catalytique à l'aide un dispositif fonctionnel de mesure (9), introduit par la lumière du tube (3) en rotation ou du tube fixe (6),
- l'on détermine quantitativement par traitement mathématique dudit relevé les écarts du profil de chargement par rapport à un profil idéal sensiblement horizontal,
- et l'on envoie, en fonction du résultat ainsi obtenu, des signaux électriques pour commander l'ajustement de certains paramètres fonctionnels du dispositif de chargement.

15. Utilisation du dispositif selon l'une des revendications 1 à 11 pour le chargement des réacteurs pétroliers, chimiques ou pétrochimiques.

## Claims

1. A device for uniformly loading solid particles in a chamber comprising, in its upper part, particle feed means (1) and, at its base located in the chamber to be loaded, a dispersal system (8) integral with a central shaft (3) rotated about a substantially vertical axis by drive means (4), and a feed line (2) at least partially surrounding the central shaft (3), said central shaft (3) is a tube having a sufficient inside diameter for carrying out, in the zone to be loaded, via this tube and during the loading period, a number of operations ancillary or complementary to said loading operation, this device being **characterized in that** a fixed tube (6), integral with the feed line (2) is placed inside the said rotating central shaft (3), the fixed tube (6) and said rotating central shaft (3) being substantially coaxial.

2. The device as claimed in claim 1, **characterized in that** the particles issuing from the feed means (1) flow in the feed line, in downflow, between the inside wall of said feed line (2) and the outer wall of said rotating central shaft (3), said feed line comprising at its base (5) at least one particle discharge opening (7), located above the dispersal system (8).

3. The device as claimed in either of claims 1 and 2, **characterized in that** the drive means (4) is off-centered about the rotating central shaft (3).

4. The device as claimed in claim 3, **characterized in that** the drive means (4) is fed with a compressed gas, preferably air or nitrogen.

5. The device as claimed in any one of the preceding claims, **characterized in that** the tube forming the central shaft (3) has an inside diameter larger than 2 cm, preferably larger than 10 cm.

6. The device as claimed in any one of the preceding claims, **characterized in that** it further comprises at least one central deflector (11), fixed to the bottom end of the fixed tube (6) and located below the dispersal system (8), designed for distributing a controlled quantity of particles in the zone located immediately below the opening of the rotating central shaft (3).

7. The device as claimed in claim 6, **characterized in that** it further comprises a funnel (10) for feeding the central deflector (11), integral with the rotating central shaft (3), passing through the dispersal system (8) and terminating above the central deflector (11), the lower part of said feed funnel (10) having a sufficient diameter for the free flow of the solid particles toward the central deflector (11).

8. The device as claimed in any one of the preceding claims, **characterized in that** it further comprises a system for sucking out dust via the rotating central shaft (3) and/or the fixed tube (6).

9. The device as claimed in claim 8, **characterized in that** the walls of the rotating central shaft (3) and of the fixed tube (6) comprise one or more suction openings (13) for this purpose, preferably located in the zone of the dispersal system (8).

10. The device as claimed in the preceding claims, **characterized in that** it further comprises a functional device (9) suspended below the bottom end of the rotating central shaft (3), of the fixed tube (6) or of the central deflector (11), via suspension means (20) passing through the opening of the rotating central shaft (3) or of the fixed tube (6), and controlled by external control means, said functional device (9) serving to carry out operations ancillary or complementary to the loading operation.

11. The device as claimed in claim 10, **characterized in that** the functional device (9) is a telemetry device, particularly a laser, ultrasonic or sonar device, a lighting device, a photographic apparatus or a camera, particularly digital, a sensor, an analysis or monitoring device, a sampling device, a suction device, a device for introducing a controlled quantity of another divided solid, a device for distributing a divided solid, or a combination thereof.

12. A method for loading a chamber with solid particles, from the top downward over the whole cross section of said chamber, using a device according to any one of claims 1 to 11.

13. The method as claimed in claim 12,
**characterized in that:**
- the speed of rotation of the central shaft (3) is adjusted according to the diameter of the chamber to be loaded,
- the solid particles are introduced continuously, via the feed means (1), into the feed line (2) of the device, and
- an operation complementary or ancillary to the loading operation is carried out through the opening of the rotating central shaft (3) or of the fixed tube (6).

14. The method as claimed in claims 12 and 13,
**characterized in that:**
- during the loading of the chamber, at least one record is made of the profile of the loading front of the catalyst bed using a functional measuring device (9), introduced via the opening of the rotating central shaft (3) or of the fixed tube (6),
- the deviations of the loading profile from an ideal substantially horizontal profile are determined quantitatively by mathematical processing of said record,
- and, according to the result thus obtained, electrical signals are sent to order the adjustment of certain functional parameters of the loading device.

15. Use of the device as claimed in one of claims 1 to 11 for loading petroleum, chemical or petrochemical reactors.

## Patentansprüche

1. Vorrichtung zum homogenen Laden fester Partikel in einen Behälter, enthaltend:
in ihrem oberen Abschnitt ein Partikelzuführmittel (1) und
an ihrer Basis, die im Inneren des zu beladenden Behälters angeordnet ist, ein Dispersionssystem (8), das mit einer Zentralwelle (3) verbunden ist, die durch ein Antriebsmittel (4) in Drehung um eine im wesentlichen vertikale Achse gebracht wird, und
eine Zuführleitung (2), die zumindest teilweise die Zentralwelle (3) umgibt,
wobei die Zentralwelle (3) ein Rohr mit einem Innendurchmesser ist, der ausreicht, um in der zu beladenden Zone mittels dieses Rohrs und während der Ladezeitspanne des Beladens eine gewisse Anzahl von Vorgängen durchzuführen, die verbunden mit oder komplementär zu dem Beladevorgang sind,
wobei die Vorrichtung **dadurch gekennzeichnet ist, dass**
ein festes Rohr (6), das mit der Zuführleitung (2) verbunden ist, in dem Inneren der Zentraldrehwelle (3) angeordnet ist,
wobei das feste Rohr und die Zentraldrehwelle (3) im wesentlichen koaxial sind.

2. Vorrichtung gemäß Anspruch 1, **dadurch gekennzeichnet,**
**dass** die aus dem Zuführmittel (1) stammenden Partikel in der Zuführleitung von oben nach unten zwischen der Innenwand der Zuführleitung (2) und der Außenwand der rotierenden Zentralwelle (3) zirkulieren.
wobei die Zuführleitung an ihrer Basis (5) zumindest eine Entleerungsöffnung (7) für die Partikel aufweist, die über dem Dispersionssystem (8) angeordnet ist.

3. Vorrichtung gemäß Anspruch 1 oder 2, **dadurch gekennzeichnet, dass** das Antriebsmittel (4) relativ zu der rotierenden Zentralwelle (3) exzentrisch ist.

4. Vorrichtung gemäß Anspruch 3, **dadurch gekennzeichnet, dass** das Antriebsmittel (4) mit einem komprimierten Gas gespeist wird, vorzugsweise Luft oder Stickstoff.

5. Vorrichtung gemäß einem der vorigen Ansprüche, **dadurch gekennzeichnet, dass** das Rohr, das die Zentralwelle (3) bildet, einen Innendurchmesser von mehr als 2 cm hat, vorzugsweise von mehr als 10 cm.

6. Vorrichtung gemäß einem der vorigen Ansprüche, **dadurch gekennzeichnet, dass** es weiter ein Zentralablenkmittel (11) aufweist, das an dem unteren Ende des festen Rohrs (6) befestigt, unter dem Dispersionssystem (8) angeordnet und so entworfen ist, dass es die Verteilung einer kontrollierten Menge in der Zone ermöglicht, die unmittelbar unter der Öffnung der rotierenden Zentralwelle (3) liegt.

7. Vorrichtung gemäß Anspruch 6, **dadurch gekennzeichnet,**
**dass** sie weiter einen Zuführtrichter (10) für den Zentralablenker (11) enthält, der mit der rotierenden Zentralwelle (3) verbunden ist, das Dispersionssystem (8) durchquert und oberhalb des Zentralablenkers (11) mündet,
wobei der untere Abschnitt des Zuführtrichters (10) einen hinreichenden Durchmesser hat, um das freie Ablaufen der festen Partikel zu dem Zentralablenker (11) hin zu ermöglichen.

8. Vorrichtung gemäß einem der vorigen Ansprüche, **dadurch gekennzeichnet, dass** es weiter ein System zum Staubabsaugen für die rotierende Zentralwelle (3) und/oder für das feste Rohr (6) enthält.

9. Vorrichtung gemäß Anspruch 8, **dadurch gekennzeichnet, dass** die Wände der rotierenden Zentralwelle (3) und des festen Rohrs (6) zu diesem Zweck eine oder mehrere Absaugöffnungen (13) enthalten, die vorzugsweise in dem Bereich des Dispersionssystems (8) angeordnet sind.

10. Vorrichtung gemäß einem der vorigen Ansprüche, **dadurch gekennzeichnet,**
**dass** sie weiter eine Funktionsvorrichtung (9) enthält, die unter dem unteren Ende der rotierenden Zentralwelle (3), des festen Rohrs (6) oder des Zentralablenkers (11) aufgehängt ist mittels eines Aufhängemittels (20), das durch die Öffnung der rotierenden Zentralwelle (3) oder des festen Rohrs (6) hindurchgeht und durch ein externes Steuermittel gesteuert wird,
wobei die Funktionsvorrichtung (9) dazu dient, Vorgänge durchzuführen, die verbunden mit oder komplementär zu dem Beladevorgang sind.

11. Vorrichtung gemäß Anspruch 10, **dadurch gekennzeichnet, dass** die Funktionsvorrichtung (9) eine Telemetrievorrichtung, insbesondere mit Laser, Ultraschall oder Schall, eine Beleuchtungsvorrichtung, ein Photoapparat oder eine Kamera, insbesondere digital, ein Sensor, eine Analyse- oder Steuervorrichtung, eine Probeentnahmevorrichtung, eine Saugvorrichtung, eine Vorrichtung zum Einbringen einer kontrollierten Menge eines anderen Feststoffs in getrennter Form, eine Vorrichtung zum Verteilen eines getrennten Feststoffs oder eine Kombination aus diesen ist.

12. Verfahren zum Laden fester Partikel in einen Behälter von oben nach unten über den gesamten Querschnitt des Behälters mittels einer Vorrichtung gemäß einem der Ansprüche 1 bis 11.

13. Verfahren gemäß Anspruch 12, **dadurch gekennzeichnet, dass**
die Drehgeschwindigkeit der Zentralwelle (3) in Abhängigkeit von dem Durchmesser des zu beladenden Behälters eingestellt wird,
kontinuierlich mittels des Zuführmittels (1) feste Partikel in die Zuführleitung (2) der Vorrichtung eingebracht werden, und
ein Vorgang, der komplementär zu oder verbunden mit dem Beladevorgang ist, durch die Öffnung des rotierenden Zentralwelle (3) oder des festen Rohrs (6) durchgeführt wird.

14. Verfahren gemäß Anspruch 12 oder 13, **dadurch gekennzeichnet, dass**
während des Ladens des Behälters zumindest ein Ablesen eines Profils der Front der Beladung des Katalysatorbetts mittels einer Messfunktionsvorrichtung (9) durchgeführt wird, die durch die Öffnung des rotierenden Zentralwelle (3) oder des festen Rohrs (6) eingeführt ist,
quantitativ durch mathematische Behandlung des Ablesens die Abweichungen des Beladungsprofils gegenüber einem im wesentlichen horizontalen Idealprofil bestimmt werden und
elektrische Signale in Abhängigkeit von den so gewonnenen Ergebnissen gesendet werden, um das Einstellen bestimmter Funktionsparameter der Beladevorrichtung zu steuern.

15. Verwendung einer Vorrichtung gemäß einem der Ansprüche 1 bis 11 für das Beladen von Öl-, chemischen oder petrochemischen Reaktoren.
